# EUROPÄISCHE PATENTANMELDUNG

(11) **EP 3 940 042 A1**
(43) Veröffentlichungstag der Anmeldung: **19.01.2022**
(21) Anmeldenummer: 20207386.2
(22) Anmeldetag: 13.11.2020
(51) Int. Cl.: C10G 9/16, C10G 70/04

(54) **VERFAHREN UND ANLAGE ZUR GEWINNUNG VON KOHLENWASSERSTOFFEN**

(30) Priorität: 17.07.2020 EP 20186559
(71) Anmelder: Linde GmbH, 82049 Pullach (DE)
(72) Erfinder: Höfel, Torben, 81543 München (DE); Kunkel, Josef, 82049 Pullach (DE)
(74) Vertreter: DehnsGermany Partnerschaft von Patentanwälten

(57) **Zusammenfassung**

Die Erfindung betrifft ein Verfahren zur Gewinnung von Kohlenwasserstoffen durch Steamcracken (1) und Aufbereitung zumindest eines Teils eines durch das Steamcracken (1) gebildeten Komponentengemischs, wobei unter Verwendung zumindest eines Teils des Komponentengemischs ein Einsatzgemisch bereitgestellt wird, das Kohlenwasserstoffe mit zwei oder zwei und mehr Kohlenstoffatomen und tiefer siedende Verbindungen enthält, und wobei unter Verwendung des Einsatzgemischs eine schwere Fraktion und eine leichte Fraktion gebildet werden, wobei die schwere Fraktion einen Teil der Kohlenwasserstoffe mit zwei oder zwei und mehr Kohlenstoffatomen aus dem Einsatzgemisch enthält und arm an oder frei von den tiefer siedenden Komponenten ist, und wobei die leichte Fraktion einen Teil der tiefer siedenden Komponenten aus dem Einsatzgemisch enthält und arm an oder frei von den Kohlenwasserstoffen mit zwei oder zwei und mehr Kohlenstoffatomen ist. Es ist vorgesehen, dass unter Verwendung zumindest eines Teils des Einsatzgemischs in einer Tieftemperaturtrennung (10) die schwere Fraktion und eine erste Zwischenfraktion gebildet werden, dass zumindest ein Teil der ersten Zwischenfraktion unter Erhalt der leichten Fraktion und einer zweiten Zwischenfraktion einer nichtkryogenen Trennung (20) unterworfen wird, und dass zumindest ein Teil der zweiten Zwischenfraktion in das Verfahren zurückgeführt wird, wobei die erste und die zweite Zwischenfraktion jeweils einen Teil der Kohlenwasserstoffe mit zwei oder zwei und mehr Kohlenstoffatomen und der tiefer siedenden Verbindungen aus dem Einsatzgemisch enthalten. Eine entsprechende Anlage ist ebenfalls Gegenstand der vorliegenden Erfindung.

## Beschreibung

Die vorliegende Erfindung betrifft ein Verfahren zur Gewinnung von Kohlenwasserstoffen durch Steamcracken und Aufbereiten eines dabei erhaltenen Komponentengemischs sowie eine entsprechende Anlage gemäß den Oberbegriffen der unabhängigen Patentansprüche.

### Stand der Technik

Verfahren und Anlagen zum Steamcracken von Kohlenwasserstoffen sind beispielsweise im Artikel "Ethylene" in Ullmann's Encyclopedia of Industrial Chemistry, Onlineausgabe, 15. April 2009, DOI: 10.1002/14356007.a10_045.pub2, beschrieben. Das Steamcracken (engl. Steam Cracking, im Deutschen auch als Dampfspalten bezeichnet) wird vorwiegend zur Gewinnung von kurzkettigen Olefinen wie Ethylen und Propylen, Diolefinen wie Butadien, oder von Aromaten eingesetzt, ist jedoch nicht auf die Gewinnung solcher Verbindungen beschränkt.

Beim Steamcracken werden Komponentengemische (auch als Spaltgase oder Rohgase bezeichnet) erhalten, die zur Gewinnung der gewünschten Einzelkomponenten geeigneten Aufbereitungssequenzen unterworfen werden. Typischerweise erfolgt dabei in einem ersten Abschnitt (engl. Front-End Section) einer entsprechenden Aufbereitungssequenz eine Entfernung schwerer Verbindungen, falls vorhanden, und danach eine sogenannte Rohgasverdichtung und Sauergasentfernung. Nach der Aufbereitung in dem ersten Abschnitt erfolgt eine Fraktionierung, in der durch thermische Trennverfahren unterschiedliche Fraktionen gebildet und bei Bedarf weiter aufgetrennt werden. Zu Details sei auf den erwähnten Artikel "Ethylene" in Ullmann's Encyclopedia of Industrial Chemistry, insbesondere die Abschnitte 5.3.2.1, "Front-End Section", und 5.3.2.2, "Hydrocarbon Fractionation Section", verwiesen.

In einer Ausgestaltung einer entsprechenden Fraktionierung, die auch im Zusammenhang mit der vorliegenden Erfindung zum Einsatz kommen kann, erfolgt in der Fraktionierung zunächst eine Trennung von Kohlenwasserstoffen mit zwei Kohlenstoffatomen und tiefer siedenden Komponenten wie Methan und Wasserstoff von Kohlenwasserstoffen mit drei Kohlenstoffatomen und höher siedenden Verbindungen. Ein derartiger Schritt wird üblicherweise auch als Deethanisierung bezeichnet, die Ausgestaltung einer entsprechenden Fraktionierung als "Deethanizer-First"- oder "Frontend-Deethanizer"-Verfahren.

Die in der Deethanisierung gasförmig erhaltene Fraktion von Kohlenwasserstoffen mit zwei Kohlenstoffatomen und tiefer siedenden Komponenten kann einer weiteren Trennung zugeführt werden, in der die Kohlenwasserstoffe mit zwei Kohlenstoffatomen von den weiter enthaltenen tiefer siedenden Komponenten abgetrennt werden. Ein derartiger Schritt wird auch als Demethanisierung bezeichnet. In einem "Deethanizer-First"- oder "Frontend-Deethanizer"-Verfahren ist also die Demethanisierung der Deethanisierung nachgeschaltet.

In alternativen Verfahren können die Schritte der Deethanisierung und der Demethanisierung auch in umgekehrter Reihenfolge durchgeführt werden. Man spricht dann von "Demethanizer-First"- oder "Frontend-Demethanizer"-Verfahren. Weitere Verfahrensvarianten sind in der erwähnten Fachliteratur beschrieben.

Die vorliegende Erfindung betrifft sämtliche Verfahren und Verfahrensvarianten, bei denen in einer entsprechenden Fraktionierung an beliebiger Stelle ein Komponentengemisch eingesetzt oder erhalten wird, das Kohlenwasserstoffe mit zwei Kohlenstoffatomen und tiefer siedende Komponenten, insbesondere Methan und Wasserstoff, enthält, und bei denen dieses Komponentengemisch, nachfolgend auch als "Einsatzgemisch" bezeichnet, einer Demethanisierung unterworfen wird. Je nach Ausgestaltung der Fraktionierung und insbesondere dem Einsatz zu Steamcracken kann das Einsatzgemisch auch geringere oder größere Mengen höher siedende Komponenten, insbesondere Kohlenwasserstoffe mit drei Kohlenstoffatomen, Kohlenwasserstoffe mit vier Kohlenstoffatomen, und ggf. auch Kohlenwasserstoffe mit mehr als vier Kohlenstoffatomen üblicher Art, enthalten.

Typischerweise werden für die ausreichende Abtrennung der Kohlenwasserstoffe mit zwei Kohlenstoffatomen von den leichteren Komponenten, ungeachtet dessen, ob in einem entsprechenden Einsatzgemisch auch höher siedende Komponenten enthalten sind, d.h. in einer Demethanisierung, Temperaturen unter -130 bis -150 °C benötigt und es sind vergleichsweise aufwendige Trennapparate erforderlich, wie nachfolgend im Detail erläutert.

Die vorliegende Erfindung stellt sich vor diesem Hintergrund die Aufgabe, die Demethanisierung im Zuge einer Aufbereitungssequenz zur Gewinnung von Fraktionen aus einem durch Steamcracken erhaltenen Komponentengemisch zu vereinfachen und apparativ vorteilhaft zu gestalten.

### Offenbarung der Erfindung

Diese Aufgabe wird durch ein Verfahren zur Gewinnung von Kohlenwasserstoffen durch Steamcracken und die Aufbereitung eines dabei erhaltenen Komponentengemischs sowie eine entsprechende Anlage gemäß den Oberbegriffen der unabhängigen Patentansprüche. Ausgestaltungen sind Gegenstand der abhängigen Patentansprüche sowie der nachfolgenden Beschreibung.

Vor der Erläuterung der Vorteile der vorliegenden Erfindung werden nachfolgend einige bei der Beschreibung der Erfindung verwendete Begriffe näher definiert.

Komponentengemische können im hier verwendeten Sprachgebrauch reich oder arm an einer oder mehreren Komponenten sein, wobei der Begriff "reich" für einen Gehalt von wenigstens 75%, 80%, 90%, 95% oder 99% und der Begriff "arm" für einen Gehalt von höchstens 25%, 20%, 1 0%, 5% oder 1% auf molarer, Gewichts- oder Volumenbasis stehen kann. Komponentengemische können im hier verwendeten Sprachgebrauch ferner angereichert oder abgereichert an einer oder mehreren Komponenten sein, wobei sich diese Begriffe auf einen entsprechenden Gehalt in einem anderen Komponentengemisch beziehen, unter Verwendung dessen das betrachtete Komponentengemisch gebildet wurde. Das betrachtete Komponentengemisch ist "angereichert", wenn es zumindest den 1,5-fachen, 2-fachen, 5-fachen, 10-fachen, 100-fachen oder 1.000-fachen Gehalt der bezeichneten Komponente(n) aufweist, und "abgereichert", wenn es höchstens den 0,75-fachen, 0,5-fachen, 0,1-fachen, 0,01-fachen oder 0,001-fachen Gehalt der bezeichneten Komponente(n) aufweist. Ein "überwiegend" eine oder mehrere Komponenten enthaltendes Komponentengemisch ist insbesondere reich an dieser bzw. diesen Komponenten im soeben erläuterten Sinn.

Ist hier davon die Rede, dass ein Komponentengemisch unter Verwendung eines anderen Komponentengemischs "gebildet" wird, sei darunter verstanden, dass das betrachtete Komponentengemisch zumindest einige der in dem anderen Komponentengemisch enthaltene oder diesen gebildete Komponenten aufweist. Ein Bilden eines Komponentengemischs aus einem anderen kann beispielsweise ein Abzweigen eines Teils des Komponentengemischs, ein Zuspeisen einer oder mehrerer weiterer Komponenten oder Komponentengemische, ein chemisches oder physikalisches Umsetzen zumindest einiger Komponenten, sowie ein Erwärmen, Abkühlen, Verdampfen, Kondensieren usw. umfassen. Ein "Bilden" eines Komponentengemischs aus einem anderen Komponentengemisch kann aber auch lediglich die Bereitstellung des anderen Komponentengemischs in geeigneter Form, beispielsweise in einem Behälter oder einer Leitung, umfassen.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen. Jedoch bewegen sich derartige Drücke und Temperaturen typischerweise in bestimmten Bereichen, die beispielsweise ± 1%, 5%, 10%, 20% oder 25% um einen Mittelwert liegen. Entsprechende Druckniveaus und Temperaturniveaus können in disjunkten Bereichen liegen oder in Bereichen, die einander überlappen. Dasselbe Druckniveau kann beispielsweise auch noch vorliegen, wenn es zu unvermeidlichen Druckverlusten kommt. Entsprechendes gilt für Temperaturniveaus. Bei den hier in bar angegebenen Druckniveaus handelt es sich um Absolutdrücke.

Zur Auslegung und spezifischen Ausgestaltung von Säulen, Kolonnen und anderen Trennapparaten sowie deren Einbauten, wie sie auch im Rahmen der vorliegenden Anmeldung eingesetzt werden können, sei ausdrücklich auf einschlägige Fachliteratur verwiesen (siehe beispielsweise Sattler, K.: Thermische Trennverfahren: Grundlagen, Auslegung, Apparate, 3. Auflage 2001, Weinheim, Wiley-VCH). Insbesondere können entsprechende Trennapparate konventionelle Trennböden, insbesondere in Form strukturierter Bleche mit Ablaufeinrichtungen, oder geeignete Packungen aufweisen.

Wird nachfolgend der Begriff "Demethanisierung" verwendet, soll dieser kurz für einen Trennschritt stehen, in dem Kohlenwasserstoffe mit zwei oder zwei und mehr Kohlenstoffatomen von tiefer siedenden Verbindungen, insbesondere Methan und Wasserstoff, aus einem der Demethanisierung zugeführten Komponentengemisch, also dem erwähnten "Einsatzgemisch", abgetrennt werden. Bei der Demethanisierung wird herkömmlicherweise eine Fraktion erhalten, die je nach Zusammensetzung des der Demethanisierung zugeführten Einsatzgemischs Kohlenwasserstoffe mit zwei oder zwei und mehr Kohlenstoffatomen enthält und stets arm an oder frei von tiefer siedenden Komponenten, insbesondere Methan und Wasserstoff, ist. Diese Fraktion wird typischerweise in flüssigem Zustand erhalten und nachfolgend auch als "schwere Fraktion" bezeichnet. Bei der Demethanisierung wird ferner eine Fraktion erhalten, die die erwähnten tiefer siedenden Verbindungen enthält und arm an oder frei von Kohlenwasserstoffen mit zwei oder zwei und mehr Kohlenstoffatomen ist. Diese Fraktion wird typischerweise in gasförmigem Zustand erhalten und nachfolgend auch als "leichte Fraktion" bezeichnet.

### Vorteile der Erfindung

Durch die vorliegende Erfindung wird die soeben nochmals erläuterte Demethanisierung apparativ deutlich vereinfacht. Auch im Rahmen der vorliegenden Erfindung werden dabei letztlich die schwere und leichte Fraktion mit den genannten Merkmalen erhalten, allerdings erfolgt zunächst lediglich eine Gewinnung der schweren Fraktion durch eine Tieftemperaturtrennung. In der Tieftemperaturtrennung wird zunächst als weitere Fraktion eine Fraktion erhalten, die neben den erwähnten tiefer siedenden Komponenten noch beträchtliche Mengen an Kohlenwasserstoffen mit zwei Kohlenstoffatomen und möglicherweise auch höher siedende Kohlenwasserstoffe enthält. Diese Fraktion wird nachfolgend auch als "erste Zwischenfraktion" bezeichnet. Im Rahmen der vorliegenden Erfindung erfolgt also eine "unscharfe" Trennung in der Demethanisierung, bei der im Wesentlichen dafür Sorge getragen wird, dass die schwere Fraktion (die typischerweise im Sumpf einer bei der erwähnten Tieftemperaturtrennung verwendeten Trennkolonne erhalten wird) in ausreichendem Maße rein von tiefer siedenden Komponenten ist, wobei die weitere erhaltene Fraktion, also die erste Zwischenfraktion (welche erfindungsgemäß zumindest zum Teil am Kopf einer bei der erwähnten Tieftemperaturtrennung verwendeten Trennkolonne erhalten wird), aber noch einen entsprechenden bzw. nennenswerten Anteil höher siedender Verbindungen enthalten kann.

Mit anderen Worten wird im Rahmen der vorliegenden Erfindung in Kauf genommen, dass wesentliche Anteile an Kohlenwasserstoffen mit zwei oder auch zwei und mehr Kohlenstoffatomen aus dem Einsatzgemisch in die erste Zwischenfraktion übergehen. Um dennoch beide erwähnten Fraktionen (d.h. auch die leichte Fraktion) zu erhalten, wird in einem nachgeschalteten nichtkryogenen Trennschritt, insbesondere einem adsorptiven Trennschritt wie einer Druckwechselabsorption (engl. Pressure Swing Adsorption, PSA) schließlich die erste Zwischenfraktion in die leichte Fraktion und eine weitere Fraktion aufgetrennt, die hier auch als "zweite Zwischenfraktion" bezeichnet wird. Die zweite Zwischenfraktion wird auf dem Desorptionsdruckniveau der Druckwechselabsorption erhalten, also einem geringeren Druckniveau als jenem, bei dem die Tieftemperaturtrennung zur Gewinnung der schweren Fraktion und der ersten Zwischenfraktion durchgeführt wird. Die zweite Zwischenfraktion enthält dabei neben den Kohlenwasserstoffen mit zwei oder auch zwei und mehr Kohlenstoffatomen auch einen nicht abgetrennten Anteil der tiefer siedenden Komponenten und kann vorteilhafterweise in die Rohgasverdichtung zurückgeführt und erneut in die zur Gewinnung der schweren Fraktion und der ersten Zwischenfraktion verwendete Tieftemperaturtrennung eingespeist werden.

Eine besonders bevorzugte Ausgestaltung der Erfindung umfasst, dass ein Teil der üblicherweise vollständig in der Demethanisierung gebildeten Kondensate entspannt, erwärmt und zurückgeführt werden. Auf diese Weise kann dieser Teil als ein weiteres Kältemittel genutzt werden.

Insgesamt schlägt die vorliegende Erfindung zur Erzielung der genannten Vorteile ein Verfahren zur Gewinnung von Kohlenwasserstoffen durch Steamcracken und Aufbereitung zumindest eines Teils eines dabei, d.h. durch das Steamcracken, gebildeten Komponentengemischs, also eines sogenannten Roh- oder Spaltgases vor. Unter Verwendung zumindest eines Teils dieses Komponentengemischs wird ein weiteres Komponentengemisch bereitgestellt, das Kohlenwasserstoffe mit zwei oder zwei und mehr Kohlenstoffatomen und tiefer siedende Verbindungen enthält. Dieses wird hier als ein "Einsatzgemisch" bezeichnet, wie erwähnt, da es für die erfindungswesentlichen Verfahrensschritte als Einsatz dient. Bei der Bildung des Einsatzgemischs können sämtliche zur Behandlung von Roh- bzw. Spaltgasen aus einem Steamcracker bekannte Verfahren und Verfahrensschritte zum Einsatz kommen, insbesondere die weiter unten erläuterten, die in einem in der erläuterten Weise zusammengesetzten Komponentengemisch führen. Die Erfindung ist hierdurch nicht beschränkt. Das Einsatzgemisch kann insbesondere 10 bis 60 Molprozent Wasserstoff, 5 bis 40 Molprozent Methan und ansonsten Kohlenwasserstoffe mit zwei oder zwei und mehr Kohlenstoffatomen aufweisen. Beispielsweise kann der Gehalt von Kohlenwasserstoffen mit zwei Kohlenstoffatomen bei 30 bis 60 Molprozent liegen. Da, wie erwähnt, das Einsatzgemisch unter Verwendung von unterschiedlichen weiteren Verfahrensschritten gebildet werden kann, und außerdem im Rahmen der vorliegenden Erfindung das zweite Zwischengemisch in das Verfahren zurückgeführt werden kann, kann die Zusammensetzung des Komponentengemischs erheblich variieren. Beispielsweise wird im Rahmen der vorliegenden Erfindung Methan zurückgeführt und reichert sich auf diese Weise im Kreislauf an. Die genannten Werte sind dabei insbesondere als breiteste Grenzen zu verstehen.

Unter Verwendung des Einsatzgemischs werden auch im Rahmen der vorliegenden Erfindung letztlich eine schwere Fraktion und eine leichte Fraktion gebildet, wobei die schwere Fraktion einen Teil der Kohlenwasserstoffe mit zwei oder zwei und mehr Kohlenstoffatomen aus dem Einsatzgemisch enthält und arm an oder frei von den tiefer siedenden Komponenten ist, und wobei die leichte Fraktion einen Teil der tiefer siedenden Komponenten aus dem Einsatzgemisch enthält und arm an oder frei von den Kohlenwasserstoffen mit zwei oder zwei und mehr Kohlenstoffatomen ist. Es handelt sich also um Fraktionen, deren Zusammensetzung den in bekannten Demethanisierungseinrichtungen gebildeten Fraktionen entsprechen, welche jedoch in gegenüber dem Stand der Technik abweichender und insbesondere in vereinfachter Weise gebildet werden, wie nachfolgend erläutert.

Erfindungsgemäß werden dabei in einer Tieftemperaturtrennung, die auch weitere Trennschritte umfassen kann, unter Verwendung zumindest eines Teils des Einsatzgemischss die schwere Fraktion und eine erste Zwischenfraktion gebildet. Zumindest ein Teil der ersten Zwischenfraktion wird unter Erhalt der leichten Fraktion und einer zweiten Zwischenfraktion einer nichtkryogenen Trennung, insbesondere der erwähnten Druckwechseladsorption, unterworfen, und zumindest ein Teil der zweiten Zwischenfraktion wird in das Verfahren zurückgeführt. Die erste und die zweite Zwischenfraktion enthalten, jedoch ggf. in unterschiedlicher Zusammensetzung aufgrund der zwischengeschalteten nichtkryogenen Trennung, jeweils einen Teil der Kohlenwasserstoffe mit zwei oder zwei und mehr Kohlenstoffatomen und der tiefer siedenden Verbindungen aus dem Einsatzgemisch. Die Kohlenwasserstoffe mit zwei oder zwei und mehr Kohlenstoffatomen müssen damit in der Tieftemperaturtrennung nicht vollständig abgetrennt werden, wie bereits erwähnt, was insbesondere den apparativen Aufwand bei der Trennung verringert. In der anschließenden nichtkryogenen Trennung müssen wiederum nicht unbedingt alle tiefer siedenden Verbindungen abgetrennt werden, da die zweite Zwischenfraktion ja wieder der kryogenen Trennung zugeführt werden kann. Durch die Kombination beider Trennschritte kann jedoch das Einsatzgemisch schließlich vollständig in die Fraktionen aufgetrennt werden, deren Zusammensetzung den in bekannten Demethanisierungseinrichtungen gebildeten Fraktionen entsprechen.

Typischerweise werden für die Demethanisierung, wie erwähnt, in bekannten Verfahren Temperaturen unter -130 bis -150 °C benöt igt. Im Zuge der Erfindung reichen Temperaturen zwischen -60°C bis -100 °C aus . Dadurch entfallen aufwendige Maßnahmen für Tieftemperaturkälte wie z.B. Expander/Booster. Bei einer nachfolgenden Ausgestaltung der Erfindung, bei der ein Teil von aus dem Einsatzgemisch gebildeten Kondensaten entspannt, erwärmt und zur Verdichtung zurückgeführt wird, wird keine externe Kälte unter -40°C benötigt.

Die im Rahmen der vorliegenden Erfindung eingesetzte Trennkolonne kann ohne Kondenser bzw. Kopfkondensator betrieben werden und benötigt eine deutlich geringere Anzahl an theoretischen oder praktischen Trennböden, was eine weitere bauliche Vereinfachung darstellt. Ferner fällt die leichte Fraktion im Rahmen der vorliegenden Erfindung auf hohem Druck an, nämlich im Wesentlichen dem Adsorptionsdruckniveau der nichtkryogenen Trennung, wenn diese als Druckwechseladsorption ausgeführt wird. Dadurch wird eine einfache Wasserstoffgewinnung ermöglicht, ohne dass diese leichte Fraktion (wie es im Falle eines Gascrackers, d.h. beim Steamcracken von gasförmigen Einsätzen, üblicherweise der Fall wäre) verdichtet werden muss.

Die erfindungsgemäß vorgeschlagene Prozesslösung eignet sich besonders für kleine Anlagen, da sie vom spezifischen Energieaufwand zwar möglicherweise weniger attraktiv ist, jedoch eine geringere Apparateanzahl aufweist.

Eine vorgeschaltete Rohgashydrierung kann im Rahmen der vorliegenden Erfindung wesentlich einfacher gestaltet werden (z.B. einstufig adiabat statt isotherm), da eine Verdünnung des Rohgases bzw. Einsatzgemischs mit dem aus dem nichtkryogenen Trennschritt, beispielsweise der Druckwechseladsorption, rückgeführten zweiten Zwischengemisch erfolgt. Erzeugt man weiterhin Kälte mit dem Rohgasverdichter, also in der Ausgestaltung der Erfindung, bei der ein Teil von aus dem Einsatzgemisch gebildeten Kondensaten entspannt, erwärmt und zur Verdichtung zurückgeführt wird, fällt die Verdünnung nochmals stärker aus.

Durch den Einsatz der vorliegenden Erfindung wird keine Rücklaufpumpe benötigt. Außerdem ist der Betriebsdruck der Trennkolonne so hoch, dass bei der Wahl eines nachgeschalteten Hochdruck-C2-Splitters zur Trennung der Kohlenwasserstoffe mit zwei Kohlenstoffatomen, d.h. von Ethan und Ethylen, voneinander keine Sumpfpumpe erforderlich ist. Dies ist wichtig und besonders vorteilhaft, wenn der Prozess ohne eine sogenannte C2-Maschine gestaltet werden soll.

Aufgrund der geringeren Abkühlung (beispielsweise -60 °C anstatt -100 °C in einer herkömmlichen Demethanisierung) sind im Rahmen der vorliegenden Erfindung weniger einzelne Kühlschritte erforderlich und die zur Kühlung und Teilkondensation erforderlichen Apparate können wesentlich einfacher z.B. in einer Coldbox angeorndet werden. Durch die geringe Bodenanzahl der Kolonne sowie keiner Notwendigkeit eines Kopfkondensators kann ggf. ebenfalls die Kolonne in einer gemeinsamen Coldbox untergebracht werden können.

Gegenüber Verfahren zur Trennung entsprechender Komponentengemische aus anderen Verfahren, wie beispielsweise der oxidativen Dehydrierung von Ethan, die wesentlich wasserstoffärmer oder frei von Wasserstoff sind, muss im vorliegenden Fall aufgrund der erhöhten Wasserstoffkonzentration auf jeden Fall tiefer als -40 °C abgekühlt werden (z.B. -60 °C), so dass ein Verfahr en, wie es beispielsweise in der EP 3 456 703 A1 offenbart ist, nicht auf den vorliegenden Fall übertragbar ist.

Die nichtkryogene Trennung kann insbesondere als eine adsorptive Trennung, insbesondere als eine Druckwechseladsorption, ausgebildet sein. Zur Druckwechseladsorption können beliebige, aus dem Stand der Technik bekannte Verfahren und Anordnungen mit mehreren parallelen Adsorberbehältern zum Einsatz kommen. Die Druckwechseladsorption kann beispielsweise auf einem Eingangs- bzw. Adsorptionsdruckniveau betrieben werden, das beim Betriebsdruckniveau der Trennkolonne liegt, so dass, wie erwähnt, die erhaltene leichte Fraktion auf einem zur nachfolgenden Wasserstoffgewinnung vorteilhaften Druckniveau vorliegt. In Verfahren zur oxidativen Dehydrierung von Ethan ist dies nicht relevant, weil Wasserstoff nicht oder kaum in den dort erhaltenen Produktgemischen enthalten ist.

Die Bereitstellung des Einsatzgemischs umfasst im Rahmen der vorliegenden Erfindung, wie an sich bekannt, vorteilhafterweise die Verdichtung zumindest eines Teils des durch das Steamcracken gebildeten Komponentengemischs, insbesondere in einem sogenannten Rohgasverdichter. Vorteilhafterweise wird zumindest ein Teil der zweiten Zwischenfraktion stromauf der Verdichtung in das Verfahren zurückgeführt und in dieser verdichtet. Auf diese Weise erreicht man, dass diese zweite Zwischenfraktion ohne Bereitstellung eines separaten Verdichters wieder der Trennung unterworfen werden kann, so dass zunächst nicht abgetrennte Komponenten nicht verlorengehen.

Vorteilhafterweise umfasst die Bereitstellung des Einsatzgemischs eine Vorkühlung, Trocknung und/oder Hydrierung. Eine zumindest teilweise Entfernung von Kohlenwasserstoffen mit drei oder drei und mehr Kohlenstoffatomen kann im Rahmen der vorliegenden Erfindung vor der Demthanisierung oder auch nach der Demethainsierung (d.h. aus dem Sumpfprodukt) erfolgen. Wie erwähnt, können dabei sämtliche Apparate und Verfahrensschritte zum Einsatz kommen, wie sie zur Bearbeitung von Spalt- oder Rohgases bekannt und fachüblich sind.

Im Rahmen der vorliegenden Erfindung erfolgt in der Tieftemperaturtrennung ein Bilden eines oder mehrerer Kondensate unter Einsatz eines oder mehrerer Abkühlapparate, insbesondere eines Gegenstromwärmetauschers, und eines oder mehrerer Abscheideapparate, insbesondere von einfachen Abscheidebehältern, und ein Trennen zumindest eines Teils des einen oder der mehreren Kondensate in einer Trennkolonne, die, wie erwähnt, vorteilhafterweise vereinfacht, d.h. mit einer geringeren Anzahl an Trennböden und ohne Kopfkondensator, und damit nach Art einer Strippkolonne, ausgebildet sein kann. Die Bildung der Kondensate an sich kann dabei in fachüblicher Weise erfolgen.

Insbesondere umfasst das Bilden des einen oder der mehreren Kondensate unter Einsatz des einen oder der mehreren Abkühlapparate und des einen oder der mehreren Abscheideapparate ein einstufiges oder schrittweises Abkühlen auf ein Temperaturniveau von -60 bis -80 °C, beispielsweise ca. -70 °C. Dieses ist das tiefste Temperaturniveau, auf das Komponenten im Rahmen der vorliegenden Erfindung abgekühlt werden müssen. Im Gegensatz zum Stand der Technik können daher sehr viel einfachere Einrichtungen zur Bereitstellung von Kältemitteln verwendet werden. Optional kann aber auch noch weiter abgekühlt werden, beispielsweise auf -100 °C, beispielsweise sofern entsprechende Kältemittel ohne zusätzlichen Aufwand bereits in der Anlage bereitstehen.

Vorteilhafterweise wird im Rahmen der vorliegenden Erfindung zumindest ein Teil eines bei dem Bilden des einen oder der mehreren Kondensate unter Einsatz des einen oder der mehreren Abkühlapparate und des einen oder der mehreren Abscheideapparate gasförmig verbleibenden Rests und/oder eines Kopfgases der Trennkolonne zumindest zu einem Teil zur Bildung der ersten Zwischenfraktion verwendet.

In einer Ausgestaltung der vorliegenden Erfindung wird vorteilhafterweise zumindest ein Teil der ersten Zwischenfraktion unter Verwendung des einen oder der mehreren bei dem Bilden des einen oder der mehreren Kondensate verwendeten Abkühlapparate erwärmt, bevor er der nichtkryogenen Trennung zugeführt wird. Auf diese Weise kann die enthaltene Kälte für die Bildung der Kondensate genutzt werden.

Eine weitere, besonders vorteilhafte Ausgestaltung umfasst, einen Teil des einen oder zumindest eines der mehreren Kondensate als Kältemittel zu nutzen, d.h. diesen Teil zu entspannen, danach unter Verwendung des einen oder der mehreren bei dem Bilden des einen oder der mehreren Kondensate verwendeten Abkühlapparate zu erwärmen, und diesen Teil zu verdichten, insbesondere unter Verwendung des genannten (Rohgas-)Verdichters, und danach stromauf der Verdichtung dem Verfahren wieder zuzuführen. Auf diese Weise wird ein Kreislauf gebildet, bei dem in dem Verfahren selbst Kältemittel gebildet und zur Kondensation genutzt wird. Der Vorteil besteht darin, dass der Bedarf an externem Kältemittel verringert wird bzw. dessen erforderliche Temperatur höher sein kann.

Das Bilden des einen oder der mehreren Kondensate unter Einsatz des einen oder der mehreren Abkühlapparate und des einen oder der mehreren Abscheideapparate erfolgt vorteilhafterweise auf einem Druckniveau von 25 bis 40 bar, und die Trennkolonne wird vorteilhafterweise auf einem Druckniveau von 20 bis 35 bar betrieben, also auf einem nur geringfügig niedrigeren Druckniveau. Ein Druckunterschied liegt vorteilhafterweise bei weniger als 10 oder 5 bar.

Vorteilhafterweise wird ferner ein weiteres Kältemittel durch den einen oder die mehreren Abkühlapparate geführt, bei dem es sich im Falle der Verwendung von Kondensat zur Kältegewinnung in einer entsprechenden Ausgestaltung der Erfindung um ein weiteres Kältemittel bei beispielsweise ca. -40 °C oder in anderen Fällen um ein Kältemittel bei beispielsweise ca. -70 bis -100 °C handeln kann. Mit anderen Worten reicht bei einer Kondensatrückführung Propylenkälte aus und ohne Kondensatrückführung ist insbesondere Ethylenkälte erforderlich.

Die erfindungsgemäße Anlage zur Gewinnung von Kohlenwasserstoffen durch Steamcracken und Aufbereitung zumindest eines Teils eines durch das Steamcracken gebildeten Komponentengemischs weist Mittel auf, die dafür eingerichtet sind, unter Verwendung zumindest eines Teils des Komponentengemischs ein Einsatzgemisch bereitzustellen, das Kohlenwasserstoffe mit zwei oder zwei und mehr Kohlenstoffatomen und tiefer siedende Verbindungen enthält, Mittel, die dafür eingerichtet sind, unter Verwendung des Einsatzgemischs eine schwere Fraktion und eine leichte Fraktion zu bilden, wobei die schwere Fraktion einen Teil der Kohlenwasserstoffe mit zwei oder zwei und mehr Kohlenstoffatomen aus dem Einsatzgemisch enthält und arm an oder frei von den tiefer siedenden Komponenten ist, und wobei die leichte Fraktion einen Teil der tiefer siedenden Komponenten aus dem Einsatzgemisch enthält und arm an oder frei von den Kohlenwasserstoffen mit zwei oder zwei und mehr Kohlenstoffatomen ist.

Erfindungsgemäß ist eine Tieftemperaturtrennung vorgesehen, die derart ausgebildet ist und betrieben wird, dass in dieser unter Verwendung zumindest eines Teil des Einsatzgemischs die schwere Fraktion und eine erste Zwischenfraktion gebildet werden. Ferner ist eine nichtkryogene Trennung vorgesehen, die dafür eingerichtet ist, zumindest ein Teil der ersten Zwischenfraktion unter Erhalt der leichten Fraktion und einer zweiten Zwischenfraktion zu bearbeiten, sowie Mittel, die dafür eingerichtet sind, zumindest ein Teil der zweiten Zwischenfraktion in das Verfahren zurückzuführen, wobei die erste und die zweite Zwischenfraktion jeweils einen Teil der Kohlenwasserstoffe mit zwei oder zwei und mehr Kohlenstoffatomen und der tiefer siedenden Verbindungen aus dem Einsatzgemisch enthalten.

Bezüglich Merkmalen und Vorteilen einer entsprechenden Anlage, die vorteilhafterweise Mittel aufweist, die sie zur Durchführung eines Verfahrens in den zuvor erläuterten Ausgestaltungen befähigen, sei auf die obigen Ausführungen ausdrücklich verwiesen.

Ausführungsformen der Erfindung werden nachfolgend unter Bezugnahme auf die beigefügten Zeichnungen näher erläutert.

### Kurze Beschreibung der Zeichnungen

Figur 1 zeigt ein Verfahren, das einer Ausführungsform der Erfindung zugrunde liegen kann, in Form eines schematischen Prozessflussdiagramms.
Figur 2 zeigt ein Verfahren gemäß einer Ausführungsform der Erfindung in Form eines schematischen Prozessflussdiagramms.

### Ausführliche Beschreibung der Zeichnungen

In den Figuren tragen einander funktional oder baulich entsprechende Elemente einander entsprechende Bezugszeichen und werden der Übersichtlichkeit halber nicht wiederholt erläutert. Die nachfolgenden Erläuterungen betreffen dabei Verfahren und entsprechende Anlagen in gleicher Weise. Es versteht sich, dass entsprechende Anlagen bzw. Verfahren in der Praxis auch optionale oder obligatorische weitere Komponenten bzw. Verfahrensschritte umfassen können. Diese sind in den nachfolgenden Figuren lediglich der Übersichtlichkeit halber nicht dargestellt.

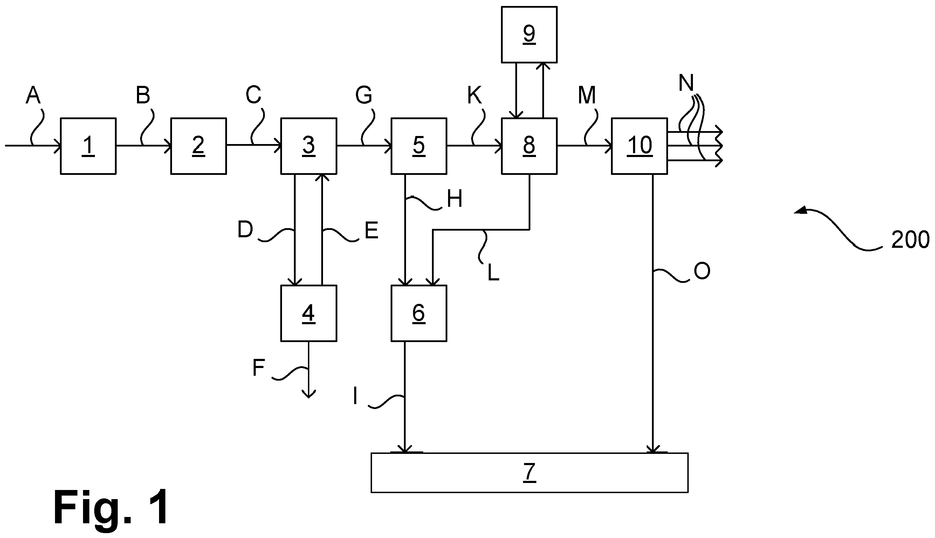

In Figur 1 ist ein Verfahren, das einer Ausführungsform der Erfindung zugrunde liegen kann, in Form eines schematischen Prozessflussdiagramms veranschaulicht. Das Verfahren ist insgesamt mit 200 bezeichnet. Die vorliegende Erfindung kann dabei mit dem veranschaulichten Verfahren, aber auch mit beliebigen anderen Verfahren bekannter Art zum Einsatz kommen. Insbesondere bezüglich des Erhalts und der Behandlung des Pyrolyseöls und Pyrolysebenzins kann sich eine Ausgestaltung der vorliegenden Erfindung unterscheiden, da hier insbesondere Ethan als Einsatz zum Steamcrackenverwendet wird und daher Pryolyseöl nicht oder in deutlich geringerem Umfang anfallen kann.

In dem Verfahren 200 wird oder werden ein oder mehrere Kohlenwasserstoffe oder Kohlenwasserstoffgemische A, insbesondere Ethan, zusammen mit Dampf einem Steamcracken 1 unterworfen. Die Kohlenwasserstoffe werden zumindest teilweise thermisch gespalten. Zum Steamcracken 1 können ein oder mehrere Cracker bekannter Art verwendet werden.

Durch das Steamcracken 1 wird ein Komponentengemisch B erhalten, welches einem Quench 2 unterworfen wird. Nach dem Quench 2 wird das Komponentengemisch, nun mit C bezeichnet, einer Ölentfernung 3 zugeführt. In der Ölentfernung 3 wird, falls in dem Komponentengemisch C enthalten, Pyrolyseöl D in einer oder mehreren Fraktionen aus dem Komponentengemisch C abgetrennt.

Das Pyrolyseöl D wird im dargestellten Beispiel einer Ölstrippung 4 unterworfen, um mit dem Pyrolyseöl D abgeschiedene leichtere Verbindungen E zurückzugewinnen. Diese werden in die Ölentfernung 3 zurückgeführt. Der verbleibende Rest F des Pyrolyseöls D kann als Rücklauf in die Ölentfernung 3 zurückgeführt und als Produkt in Form von Cracköl dem Verfahren 100 entzogen werden. Zusätzlich oder alternativ kann auch nicht der Ölstrippung 4 unterworfenes Pyrolyseöl D als Rücklauf in die Ölentfernung 3 zurückgeführt werden.

Eine nach der Ölentfernung 3 verbleibender Rest G des Komponentengemischs C oder das gesamte Komponentengemisch C, falls keine Ölentfernung 3 erfolgt, wird einer Benzinentfernung 5 zugeführt, deren Vorhandensein und Ausgestaltung sich ebenfalls nach dem Gehalt von Pyrolysebenzin in dem Komponentengemisch C richtet. In der Benzinentfernung 5 wird (schweres) Pyrolysebenzin H abgetrennt.

Das schwere Pyrolysebenzin H wird im dargestellten Beispiel zumindest teilweise einer Benzinstrippung 6 zugeführt, um leichte Komponenten zu entfernen. Letztere können dem Verfahren entzogen oder an geeigneter Stelle in das Verfahren zurückgeführt werden. Ein Teil des schweren Pyrolysebenzins H kann vor und/oder nach der Benzinstrippung 6 in die Ölentfernung 3 zurückgeführt werden.

Das in der Benzinstrippung 6 erhaltene gestrippte Pyrolysebenzin, nun mit I bezeichnet, wird dem sogenannten Benzinweg 7 zugeführt, der hier nicht näher erläutert wird. Es kann auch vorgesehen sein, einen Teil des schweren Pyrolysebenzins H ohne Strippung direkt dem Benzinweg 7 zuzuführen.

Ein nach der Benzinentfernung 5 verbleibender Rest K des Komponentengemischs G bzw. falls keine Benzinentfernung 5 vorgesehen ist, auch das gesamte Komponentengemisch G, wird im dargestellten Beispiel einer insbesondere mehrstufigen Verdichtung 8, der sogenannten Rohgasverdichtung, zugeführt, im Zuge derer eine Sauergasentfernung 9 erfolgen kann. In der Rohgasverdichtung 6 kann weiteres Pyrolysebenzin L abgeschieden werden, das beispielsweise ebenfalls der Benzinstrippung 6 oder direkt dem Benzinweg 7 zugeführt werden kann.

Das von Sauergasen befreite, verdichtete Komponentengemisch M wird einer Fraktionierung 10 zugeführt, in der mehrere Fraktionen, hier exemplarisch mit N veranschaulicht, gebildet werden. Die Fraktionierung kann unter Verwendung beliebiger Apparate durchgeführt werden. Die Fraktionen N umfassen beispielsweise Fraktionen, die überwiegend oder ausschließlich Verbindungen mit zwei, drei, vier oder mehr als vier Kohlenstoffatomen aufweisen, oder entsprechende Sammelfraktionen oder spezifische Kohlenwasserstoffe wie Ethan oder Ethylen. Die Fraktionen N werden einer geeigneten Verwendung zugeführt. Ihre Bildung richtet sich wiederum nach den dem Steamcracken 1 unterworfenen Kohlenwasserstoffe und damit den entsprechenden Gehalten in dem Komponentengemisch B.

In der Fraktionierung 10 kann weiteres Pyrolysebenzin O gebildet werden, das jedoch vorteilhafterweise nicht der Benzinstrippung 6 zugeführt wird. Das Pyrolysebenzin kann dem Benzinweg 7 beispielsweise an anderer Stelle zugeführt werden.

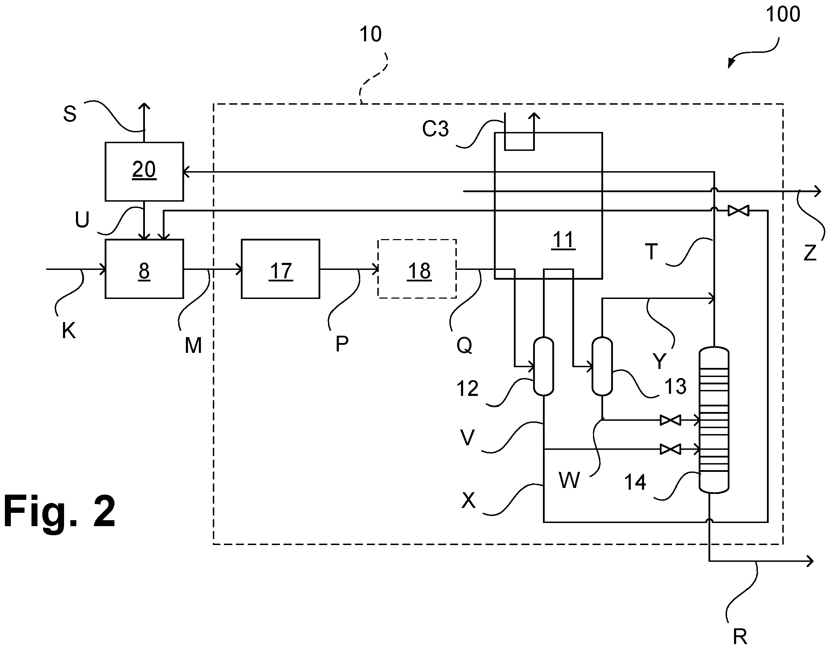

In Figur 2 ist ein Verfahren gemäß einer bevorzugten Ausführungsform der vorliegenden Erfindung in Form eines schematischen Prozessflussdiagramms veranschaulicht. Das Verfahren ist insgesamt mit 100 bezeichnet. Es kann insbesondere in das Verfahren 200 gemäß Figur 1 oder ein vergleichbares Verfahren eingebunden sein, wobei die Einbindung insbesondere durch die Darstellung und entsprechende Bezeichnung der Stoffströme K und M und der Verdichtung 8 ergibt. Die Darstellung gemäß Figur 2 entspricht damit insbesondere einer Teildarstellung des Verfahrens 200 aus Figur 1 oder einem anderen ähnlich oder abweichend ausgebildeten Verfahren, wobei sich weitere Komponenten zumindest zu einem Teil aus der Darstellung des Verfahrens 200 gemäß Figur 1 ergeben.

Die in Form einer Tieftemperaturtrennung 10 ausgebildete Fraktionierung ist hier näher veranschaulicht. Sie umfasst insbesondere eine Vorkühlung, Trocknung und Rohgashydrierung 17. Alle Komponenten können in fachüblicher Weise ausgebildet sein. Die Rohgashydrierung kann, insbesondere bei einer Hydrierung einzelner Fraktionen im Anschluss, auch entfallen.

Das entsprechend behandelte Komponentengemisch, nun mit P bezeichnet, kann einer optional vorhandenen Deethanisierung 18 zugeführt werden, in welchem Fall unter Verwendung zumindest eines Teils des Komponentengemischs P, und damit auch unter Verwendung zumindest eines Teils des Komponentengemischs B, ein weiteres, hier als "Einsatzgemisch" bezeichnetes Komponentengemisch Q bereitgestellt wird, das Kohlenwasserstoffe mit zwei Kohlenstoffatomen und tiefer siedende Verbindungen, aber keine Kohlenwasserstoffe mit drei oder mehr Kohlenstoffatomen enthält. Wird keine Deethanisierung 18 verwendet, kann ein entsprechendes Einsatzgemisch auch Kohlenwasserstoffe mit mehr als drei Kohlenstoffatomen enthalten.

Unter Verwendung des Einsatzgemischs werden eine schwere Fraktion R und eine leichte Fraktion S gebildet, wobei die schwere Fraktion einen Teil der Kohlenwasserstoffe mit zwei oder zwei und mehr Kohlenstoffatomen aus dem Einsatzgemisch Q enthält und arm an oder frei von den tiefer siedenden Komponenten ist, und wobei die leichte Fraktion S einen Teil der tiefer siedenden Komponenten aus dem Einsatzgemisch Q enthält und arm an oder frei von den Kohlenwasserstoffen mit zwei oder zwei und mehr Kohlenstoffatomen ist

In der hier veranschaulichten Ausgestaltung der Erfindung wird in der Tieftemperaturtrennung 10 unter Verwendung zumindest ein Teil des Einsatzgemischs Q die schwere Fraktion R und eine erste Zwischenfraktion T gebildet. Zumindest ein Teil der ersten Zwischenfraktion T wird ferner unter Erhalt der leichten Fraktion S und einer zweiten Zwischenfraktion U einer nichtkryogenen Trennung 20 unterworfen wird, insbesondere einer Druckwechseladsorption. Die zweite Zwischenfraktion U wird in das Verfahren 100 zurückgeführt, und zwar im dargestellten Beispiel stromauf der Verdichtung 8, wo diese auch entsprechend verdichtet wird. Wie mehrfach erwähnt, enthalten die erste Zwischenfraktion T und die zweite Zwischenfraktion U jeweils einen Teil der Kohlenwasserstoffe mit zwei oder zwei und mehr Kohlenstoffatomen und der tiefer siedenden Verbindungen aus dem Einsatzgemisch Q.

In der Tieftemperaturtrennung 10 werden Kondensate V und W unter Einsatz eines oder mehrerer Abkühlapparate 11 in Form eines Gegenstromwärmetauschers und zweier Abscheideapparate 12, 13 in Form von Abscheidebehältern gebildet. Ein Teil des Kondensats V wird in Form eines Stoffstroms X entspannt, durch den Abkühlapparat 11 zurückgeführt, dort erwärmt und erneut der Verdichtung zugeführt. Der Stoffstrom X dient damit als in dem Verfahren produziertes Kältemittel. Der verbleibende Rest des Kondensats X und das gesamte Kondensat W werden einer Trennung in einer Trennkolonne 14 unterworfen. Das Bilden der Kondensate des Abkühlapparats 11 und der Abscheideapparate 12, 13 umfasst hier ein zweistufiges Abkühlen auf ein Temperaturniveau von beispielsweise ca. -70 °C und erfolgt auf einem Druckniveau von beispielsweise ca. 25 bis 40 bar. Die Trennkolonne 14 wird auf einem Druckniveau von beispielsweise ca. 20 bis 35 bar betrieben, so dass die Kondensate V und W bzw. deren in die Trennkolonne 14 eingespeisten Anteile über entsprechende, nicht gesondert bezeichnete Regelventile geführt und ggf. entspannt werden. Hierbei ist lediglich wesentlich, dass das Druckniveau des Einsatzgemisches Q hoch genug ist, so dass genügend Kondensatbildung in der Abkühlung 11 erfolgt und dass das Druckniveau der Trennkolonne 14 hoch genug ist, so dass der anschließende Trennprozess 20 noch effektiv betrieben werden kann. In einer Ausgestaltung sind die beiden Druckniveaus nahezu identisch bzw. gerade so unterschiedlich, dass die Kondensate V und W ohne weitere Hilfsmittel wie Pumpen in die Trennkolonne 14 geführt werden können.

Zumindest ein Teil eines bei dem Bilden der Kondensate V und W unter Einsatz des Abkühlapparats 11 und der Abscheideapparate 12, 13 gasförmig verbleibender Rest, hier in Form eines Stoffstroms Y veranschaulicht, und ein nicht gesondert bezeichnetes Kopfgas der Trennkolonne 14 werden im dargestellten Beispiel zur Bildung der ersten Zwischenfraktion, d.h. des Stoffstroms T, verwendet. Der Stoffstrom T wird dabei unter Verwendung des bei dem Bilden der Kondensate V und W verwendeten Abkühlapparats 11 erwärmt bevor er der nichtkryogenen Trennung 20 zugeführt wird. Der Abkühlapparat 11 wird auch unter Verwendung eines geeigneten Kältemittels C3, beispielsweise Niederdruckpropylen, betrieben.

Falls für das Gesamtverfahren 200 erforderlich bzw. von Vorteil, können auch noch weitere Stoffströme in dem Abkühlapparat 11 als Kältemittel genutzt werden. Zusätzlich können auch noch weitere Stoffströme, die nicht direkt mit dem Verfahren 100 zusammenhängen, abgekühlt oder kondensiert werden. In dem gezeigten Beispiel wird ein flüssiger Ethylenproduktstrom Z auf das gleiche Temperaturniveau wie das Kondensat W abgekühlt.

## Patentansprüche

1. Verfahren (100) zur Gewinnung von Kohlenwasserstoffen durch Steamcracken (1) und Aufbereitung zumindest eines Teils eines durch das Steamcracken (1) gebildeten Komponentengemischs, wobei unter Verwendung zumindest eines Teils des Komponentengemischs ein Einsatzgemisch bereitgestellt wird, das Kohlenwasserstoffe mit zwei oder zwei und mehr Kohlenstoffatomen und tiefer siedende Verbindungen enthält, und wobei unter Verwendung des Einsatzgemischs eine schwere Fraktion und eine leichte Fraktion gebildet werden, wobei die schwere Fraktion einen Teil der Kohlenwasserstoffe mit zwei oder zwei und mehr Kohlenstoffatomen aus dem Einsatzgemisch enthält und arm an oder frei von den tiefer siedenden Komponenten ist, und wobei die leichte Fraktion einen Teil der tiefer siedenden Komponenten aus dem Einsatzgemisch enthält und arm an oder frei von den Kohlenwasserstoffen mit zwei oder zwei und mehr Kohlenstoffatomen ist, **dadurch gekennzeichnet, dass** in einer Tieftemperaturtrennung (10) unter Verwendung zumindest eines Teils des Einsatzgemischs die schwere Fraktion und eine erste Zwischenfraktion gebildet werden, dass zumindest ein Teil der ersten Zwischenfraktion unter Erhalt der leichten Fraktion und einer zweiten Zwischenfraktion einer nichtkryogenen Trennung (20) unterworfen wird, und dass zumindest ein Teil der zweiten Zwischenfraktion in das Verfahren zurückgeführt wird, wobei die erste und die zweite Zwischenfraktion jeweils einen Teil der Kohlenwasserstoffe mit zwei oder zwei und mehr Kohlenstoffatomen und der tiefer siedenden Verbindungen aus dem Einsatzgemisch enthalten.

2. Verfahren (100) nach Anspruch 1, bei dem eine adsorptive Trennung, insbesondere eine Druckwechseladsorption, als die nichtkryogene Trennung (20) verwendet wird.

3. Verfahren (100) nach Anspruch 1 oder 2, bei dem die Bereitstellung des Einsatzgemischs die Verdichtung (8) zumindest eines Teils des durch das Steamcracken (1) gebildeten Komponentengemischs umfasst.

4. Verfahren (100) nach Anspruch 3, bei dem zumindest ein Teil der zweiten Zwischenfraktion stromauf der Verdichtung (8) in das Verfahren (100) zurückgeführt und in dieser verdichtet wird.

5. Verfahren (100) nach einem der vorstehenden Ansprüche, bei dem die Bereitstellung des Einsatzgemischs eine Vorkühlung, Trocknung und/oder Hydrierung (17) und/oder eine zumindest teilweise Entfernung (18) von Kohlenwasserstoffen mit drei oder drei und mehr Kohlenstoffatomen umfasst.

6. Verfahren (100) nach einem der vorstehenden Ansprüche, bei dem die Tieftemperaturtrennung (10) ein Bilden eines oder mehrerer Kondensate unter Verwendung eines oder mehrerer Abkühlapparate (11) und eines oder mehrerer Abscheideapparate (12, 13) und ein Trennen zumindest eines Teils des einen oder der mehreren Kondensate in einer Trennkolonne (14) umfasst.

7. Verfahren (100) nach Anspruch 6, bei dem das Bilden des einen oder der mehreren Kondensate unter Verwendung des einen oder der mehreren Abkühlapparate (11) und des einen oder der mehreren Abscheideapparate (12, 13) ein einstufiges oder mehrstufiges Abkühlen auf ein Temperaturniveau von -60 bis -80 °C umfasst.

8. Verfahren (100) nach Anspruch 7, bei dem zumindest ein Teil eines bei dem Bilden des einen oder der mehreren Kondensate unter Verwendung des einen oder der mehreren Abkühlapparate (11) und des einen oder der mehreren Abscheideapparate (12, 13) gasförmig verbleibenden Rests und/oder eines Kopfgases der Trennkolonne (14) zumindest zu einem Teil zur Bildung der ersten Zwischenfraktion verwendet wird.

9. Verfahren (100) nach Anspruch 8, bei dem zumindest ein Teil der ersten Zwischenfraktion unter Verwendung des einen oder der mehreren bei dem Bilden des einen oder der mehreren Kondensate verwendeten Abkühlapparate (11) erwärmt wird, bevor er der nichtkryogenen Trennung (20) zugeführt wird.

10. Verfahren (100) nach einem der Ansprüche 6 bis 9, bei dem ein Teil des einen oder zumindest eines der mehreren Kondensate entspannt, danach unter Verwendung des einen oder der mehreren, bei dem Bilden des einen oder der mehreren Kondensate verwendeten Abkühlapparate (11) erwärmt, danach verdichtet und dem Verfahren (100) wieder zugeführt wird.

11. Verfahren (100) nach einem der Ansprüche 6 bis 10, bei dem das Bilden des einen oder der mehreren Kondensate unter Einsatz des einen oder der mehreren Abkühlapparate (11) und des einen oder der mehreren Abscheideapparate (12, 13) auf einem Druckniveau von 25 bis 40 bar erfolgt, und bei dem die Trennkolonne (14) auf einem Druckniveau von 20 bis 35 bar betrieben wird.

12. Verfahren (100) nach einem der vorstehenden Ansprüche, bei dem ein Kältemittel durch den einen oder die mehreren Abkühlapparate (11) geführt wird.

13. Anlage zur Gewinnung von Kohlenwasserstoffen durch Steamcracken (1) und Aufbereitung zumindest eines Teils eines durch das Steamcracken (1) gebildeten Komponentengemischs, mit Mitteln, die dafür eingerichtet sind, unter Verwendung zumindest eines Teils des Komponentengemischs ein Einsatzgemisch bereitzustellen, das Kohlenwasserstoffe mit zwei oder zwei und mehr Kohlenstoffatomen und tiefer siedende Verbindungen enthält, und mit Mitteln, die dafür eingerichtet sind, unter Verwendung des Einsatzgemischs eine schwere Fraktion und eine leichte Fraktion zu bilden, wobei die schwere Fraktion einen Teil der Kohlenwasserstoffe mit zwei oder zwei und mehr Kohlenstoffatomen aus dem Einsatzgemisch enthält und arm an oder frei von den tiefer siedenden Komponenten ist, und wobei die leichte Fraktion einen Teil der tiefer siedenden Komponenten aus dem Einsatzgemisch enthält und arm an oder frei von den Kohlenwasserstoffen mit zwei oder zwei und mehr Kohlenstoffatomen ist, **gekennzeichnet durch** eine Tieftemperaturtrennung (10), die derart ausgebildet ist und betrieben wird, dass in dieser unter Verwendung zumindest eines Teils des Einsatzgemischs die schwere Fraktion und eine erste Zwischenfraktion gebildet werden, eine nichtkryogene Trennung (20) die dafür eingerichtet ist, zumindest ein Teil der ersten Zwischenfraktion unter Erhalt der leichten Fraktion und einer zweiten Zwischenfraktion zu bearbeiten, und Mitteln, die dafür eingerichtet sind, zumindest ein Teil der zweiten Zwischenfraktion in das Verfahren zurückzuführen, wobei die erste und die zweite Zwischenfraktion jeweils einen Teil der Kohlenwasserstoffe mit zwei oder zwei und mehr Kohlenstoffatomen und der tiefer siedenden Verbindungen aus dem Einsatzgemisch enthalten.

14. Anlage nach Anspruch 13, die zur Durchführung eines Verfahrens nach einem der Ansprüche 1 bis 12 eingerichtet ist.
